# EUROPEAN PATENT APPLICATION

(11) **EP 4 322 599 A1**
(43) Date of publication of application: **14.02.2024**
(21) Application number: 22803878.2
(22) Date of filing: 13.05.2022
(51) Int. Cl.: H04W 24/08, H04L 5/00

(54) **METHOD FOR DETERMINING MEASUREMENT GAP, AND TERMINAL AND NETWORK-SIDE DEVICE**

(30) Priority: 18.05.2021 CN 202110541092
(71) Applicant: Vivo Mobile Communication Co., Ltd., Dongguan, Guangdong 523863 (CN)
(72) Inventor: WEI, Xusheng, Dongguan, Guangdong 523863 (CN)
(74) Representative: Murgitroyd & Company
(86) International application number: PCT/CN2022/092652
(87) International publication number: WO 2022/242556

(57) **Abstract**

The present application discloses a measurement gap determining method, a terminal, and a network side device, which belong to the technical field of wireless communication. The measurement gap determining method includes: obtaining, by a terminal, indication information of multiple measurement gap patterns, where the multiple measurement gap patterns are measurement gap patterns configured by a network side device for the terminal; and in a case that measurement gaps corresponding to different measurement gap patterns conflict with each other, determining, by the terminal according to the indication information, a first target measurement gap to be used and/or a second target measurement gap to be dropped, where the first target measurement gap and the second target measurement gap are one or more measurement gaps of multiple measurement gaps that conflict with each other.

## Description

### CROSS-REFERENCE TO RELATED APPLICATION

The present invention claims priority to Chinese Patent Application No. 202110541092.4, filed with the China National Intellectual Property Administration on May 18, 2021, and entitled "MEASUREMENT GAP DETERMINING METHOD, TERMINAL, AND NETWORK SIDE DEVICE", which is incorporated herein by reference in its entirety.

### TECHNICAL FIELD

The present application belongs to the technical field of wireless communication, and in particular relates to a measurement gap determining method, a terminal, and a network side device.

### BACKGROUND

In radio resource management (Radio resource management, RRM) measurement, because frequencies of inter-frequency measurement (inter-frequency) and inter-RAT (inter-RAT) measurement are different from that of a serving cell, signal sending and receiving of the serving cell and inter-frequency measurement cannot be completed simultaneously by using the same radio frequency chain (RF chain). Therefore, in a case that the radio frequency channel of the terminal is limited, a measurement gap (gap) needs to be introduced for measurement.

In related technologies, a terminal is generally configured with a measurement gap pattern (gap pattern), but for new radio (New Radio, NR), the complexity of measurement objects is relatively high. For example, positioning information and channel state information reference signals (Channel State Information Reference Signal, CSI-RS) may be included. The increase in complexity in the time domain is manifested in the increase in aperiodic measurement objects, or multiple measurement objects (Measurement Object, MO) have different periods and offsets (offset), and the increase in complexity in the frequency domain is manifested in the great increase in a possible position of the center frequency of the measurement object. At present, in order to ensure that the measurement based on the measurement gap is more efficient, it is hoped that multiple MOs (for example, multiple synchronization signals/physical broadcast channel signal blocks (or synchronization signal blocks) (Synchronization Signal and PBCH block, SSB)) are aligned as much as possible in the time domain, but this reduces the flexibility of network configuration.

In order to make network configuration more flexible and reduce the overhead of gap measurement, multiple measurement gap patterns (gap patterns) can be configured for a terminal. However, when measurement gaps corresponding to the multiple measurement gap patterns configured for the terminal conflict, how the terminal determines the measurement gaps currently has no effective solution.

### SUMMARY

Embodiments of the present application provide a measurement gap determining method, a terminal, and a network side device, which can solve the problem of how a terminal determines measurement gaps when measurement gaps corresponding to multiple measurement gap patterns configured for the terminal conflict.

According to a first aspect, a measurement gap determining method is provided, including: obtaining, by a terminal, indication information of multiple measurement gap patterns, where the multiple measurement gap patterns are measurement gap patterns configured by a network side device for the terminal; and in a case that measurement gaps corresponding to the different measurement gap patterns conflict with each other, determining, by the terminal according to the indication information, a first target measurement gap to be used and/or a second target measurement gap to be dropped, where the first target measurement gap and the second target measurement gap are one or more measurement gaps of the multiple measurement gaps that conflict with each other.

According to a second aspect, a measurement gap determining apparatus is provided, including: an obtaining module, configured to obtain indication information of multiple measurement gap patterns, where the multiple measurement gap patterns are measurement gap patterns configured by a network side device for the terminal; and a determining module, configured to: in a case that measurement gaps corresponding to the different measurement gap patterns conflict with each other, determine, according to the indication information, a first target measurement gap to be used and/or a second target measurement gap to be dropped, where the target measurement gap is one or more measurement gaps of the multiple measurement gaps that conflict with each other.

According to a third aspect, a measurement gap indication method is provided, including: sending, by a network side device, indication information of multiple measurement gap patterns to a terminal, where the multiple measurement gap patterns are measurement gap patterns configured by a network side device for the terminal; and the indication information is used to: in a case that measurement gaps corresponding to the different measurement gap patterns conflict with each other, determine a first target measurement gap to be used and/or a second target measurement gap to be dropped, where the first target measurement gap and the second target measurement gap are one or more measurement gaps of the multiple measurement gaps that conflict with each other.

According to a fourth aspect, a measurement gap indication apparatus is provided, including: a configuration module, configured to configure multiple measurement gap patterns for a terminal; and a sending module, configured to send indication information of the multiple measurement gap patterns to the terminal, where the indication information is used to: in a case that measurement gaps corresponding to the different measurement gap patterns conflict with each other, determine a first target measurement gap to be used and/or a second target measurement gap to be dropped, where the first target measurement gap and the second target measurement gap are one or more measurement gaps of the multiple measurement gaps that conflict with each other.

According to a fifth aspect, a terminal is provided. The terminal includes a processor, a memory, and a program or an instruction stored in the memory and executable on the processor, where when the program or the instruction is executed by the processor, steps of the method in the first aspect are implemented.

According to a sixth aspect, a terminal is provided, including a processor and a communication interface, where the processor is configured to implement the steps of the method in the first aspect, and the communication interface is configured to communicate with a network side device.

According to a seventh aspect, a network side device is provided. The network side device includes a processor, a memory, and a program or an instruction stored in the memory and executable on the processor, where when the program or the instruction is executed by the processor, steps of the method in the third aspect are implemented.

According to an eighth aspect, a network side device is provided, including a processor and a communication interface, where the processor is configured to implement the steps of the method in the third aspect, and the communication interface is configured to communicate with a terminal.

According to a ninth aspect, a readable storage medium is provided, where a program or an instruction is stored in the readable storage medium, and the program or the instruction is executed by a processor to implement the steps of the method in the first aspect or the steps of the method in the third aspect.

According to a tenth aspect, a chip is provided, the chip includes a processor and a communication interface, the communication interface is coupled to the processor, and the processor is configured to execute programs or instructions to implement the steps of the method in the first aspect or the steps of the method in the third aspect.

According to an eleventh aspect, a computer program/program product is provided, the computer program/program product is stored in a non-transitory storage medium, and the program/program product is executed by at least one processor to implement the steps of the method in the first aspect or the steps of the method in the third aspect.

In the embodiment of the present application, a terminal obtains indication information of multiple measurement gap patterns, where the multiple measurement gap patterns are measurement gap patterns configured by a network side device for the terminal; and in a case that measurement gaps corresponding to the different measurement gap patterns conflict with each other, the terminal determines, according to the indication information, a first target measurement gap to be used and/or a second target measurement gap to be dropped, where the first target measurement gap and the second target measurement gap are one or more measurement gaps of the multiple measurement gaps that conflict with each other. Therefore, in the case that the measurement gaps corresponding to multiple measurement gap patterns configured for one terminal conflict with each other, the measurement gap to be used or dropped can be determined.

### BRIEF DESCRIPTION OF DRAWINGS

FIG. 1 is a schematic diagram of a wireless communications system to which an embodiment of this application can be applied;
FIG. 2a is a schematic diagram of measurement gaps configured in multiple measurement gap patterns in an embodiment of the present application;
FIG. 2b is another schematic diagram of measurement gaps configured in multiple measurement gap patterns in an embodiment of the present application;
FIG. 2c is still another schematic diagram of measurement gaps configured in multiple measurement gap patterns in an embodiment of the present application;
FIG. 3 is a schematic flowchart of a measurement gap determining method in an embodiment of the present application;
FIG. 4 is a schematic flowchart of a measurement gap indication method in an embodiment of the present application;
FIG. 5 is a schematic structural diagram of a measurement gap determining apparatus in an embodiment of the present application;
FIG. 6 is a schematic structural diagram of a measurement gap indication apparatus in an embodiment of the present application;
FIG. 7 is a schematic structural diagram of a communications device in an embodiment of this application;
FIG. 8 is a schematic diagram of a hardware structure of a terminal in an embodiment of this application; and
FIG. 9 is a schematic diagram of a hardware structure of a network side device in an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. A new radio (New Radio, NR) system is described in the following description for illustrative purposes, and the NR terminology is used in most of the following description, although these technologies can also be applied to applications other than the NR system application, such as the 6-th generation (6-th Generation, 6G) communications system.

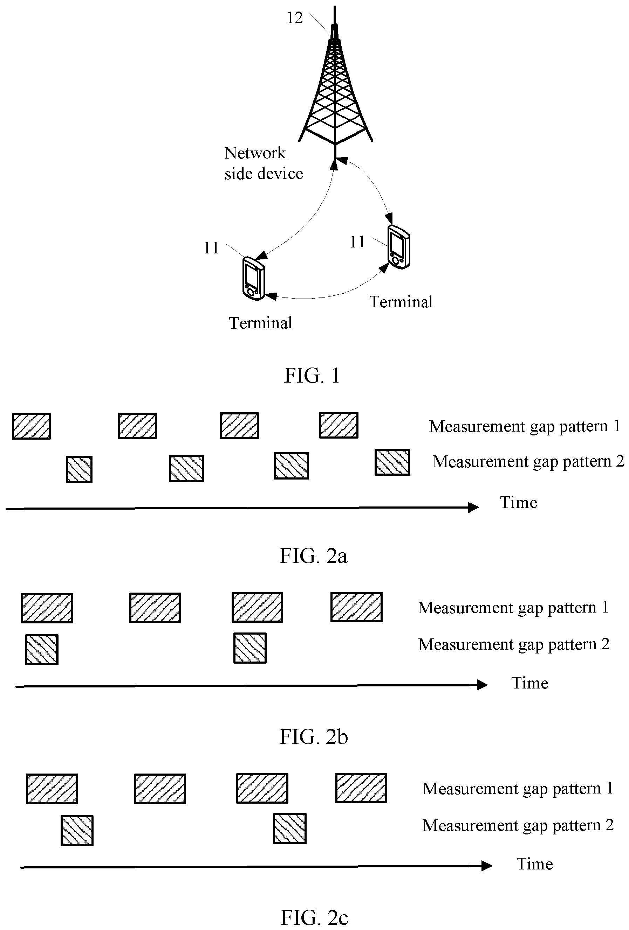

FIG. 1 is a schematic diagram of a wireless communications system to which an embodiment of this application can be applied. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VLTE), or pedestrian user equipment (PUE). The wearable device includes a smartwatch, a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmitting receiving point (Transmitting Receiving Point, TRP), or another suitable term in the field provided that a same technical effect is achieved. The base station is not limited to a specific technical term. It should be noted that, in this application, only a base station in an NR system is used as an example, but a specific type of the base station is not limited.

Due to the limitation of a single configured measurement gap pattern on terminal measurement, a mechanism supporting simultaneous configuration of multiple measurement gap patterns may be introduced. In the case of configuring multiple measurement gap (gap) patterns (pattern), logically speaking, all MOs that need to use measurement gaps for measurement can be grouped. For example, in the case of configuring two measurement gap patterns, most MOs are measured using gap pattern1, and the remaining MOs (which generally have attributes obviously different from those of the most MOs) are measured using gap pattern2, which can ensure the gain of multiple measurement gap patterns.

When using multiple configured measurement gap patterns, there may be three cases shown in FIG. 2a to FIG. 2c. The first case is that gaps between various gap patterns do not overlap at all, as shown in FIG. 2a. The second case is complete overlap (the periods of the gap patterns can be the same or different), as shown in FIG. 2b. The third case is partial overlap, as shown in FIG. 2c, where the third case can be regarded as the usual case of the second case, that is, offsets of gap patterns are different. In the cases shown in FIG. 2b and FIG. 2c, only one of all gaps that overlap completely or partially is valid, because the terminal can only measure one MO during the time period of a measurement gap. The terminal can consider other measurement gaps invalid and ignore them.

As mentioned above, for overlapping (including partially overlapping) measurement gaps (which can be called conflicting measurement gaps), the terminal can ignore some or all of the measurement gaps. How to ignore measurement gaps and which measurement gaps are ignored when performance indicators are met is a terminal implementation program.

One purpose of using multiple gap pattern configurations is to improve system performance (such as throughput), as shown in FIG. 2(b), gap pattern 2 and gap pattern 1 completely overlap, and the purpose of configuring gap pattern 2 at this time is to use gap pattern 2 to measure the MO of certain characteristics. The MO can be measured with a shorter gap. For example, in the measurement gap that can be used in frequency range (Frequency range, FR) 1 specified by NR, the maximum duration is 6ms, and the minimum duration is 3ms. When some MOs can use a shorter measurement duration, using a shorter measurement duration can improve system throughput. In order to achieve this design purpose and ensure related performance, how the terminal drops the overlapping measurement gaps (that is, the conflicting measurement gaps) is a problem that needs to be solved at present.

In a possible implementation of the embodiment of this application, the network side device can design a measurement gap dropping (gap dropping) rule in the case of measurement gap overlapping (conflicting) according to the characteristics of multiple gap patterns, so as to ensure improvement of system performance in multiple gap pattern configurations. The network side device may notify the terminal of the configured gap dropping rule through related (RRC) signaling.

The solution for determining a measurement gap provided by the embodiment of the present application will be described in detail below through some embodiments and application scenarios with reference to the accompanying drawings.

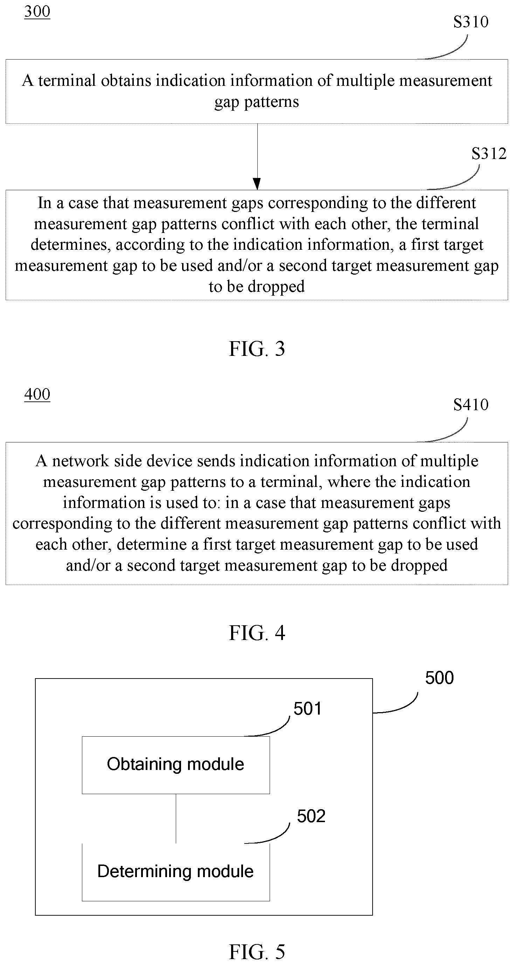

FIG. 3 is a schematic flowchart of a measurement gap determining method in an embodiment of the present application, and the method 300 may be executed by a terminal. In other words, the method may be performed by software or hardware installed in the terminal. As shown in FIG. 3, the method may include the following steps:

S310. A terminal obtains indication information of multiple measurement gap patterns, where the multiple measurement gap patterns are measurement gap patterns configured by a network side device for the terminal.

In the embodiment of the present application, the network side device configures multiple measurement gap patterns for the terminal. For example, in FIG. 2a to FIG. 2c, a terminal is configured with two measurement gap patterns: gap pattern 1 and gap pattern 2.

In the embodiment of the present application, the periods of the multiple measurement gap patterns may be the same or different, which is not specifically limited in the embodiment of the present application.

S312. In a case that measurement gaps corresponding to the different measurement gap patterns conflict with each other, the terminal determines, according to the indication information, a first target measurement gap to be used and/or a second target measurement gap to be dropped, where the first target measurement gap and the second target measurement gap are one or more measurement gaps of the multiple measurement gaps that conflict with each other.

In the embodiment of the present application, when there is a conflict between measurement gaps corresponding to different measurement gap patterns among the multiple measurement gap patterns configured for the terminal, that is, the measurement gaps corresponding to the different measurement gap patterns overlap partially or completely, the terminal may determine, according to the indication information of each measurement gap pattern, a first target measurement gap to be used and/or a second target measurement gap to be dropped, so as to implement a mechanism for configuring multiple measurement gap patterns for one terminal to satisfy the requirements of a communication system.

In a possible implementation of the embodiment of the present application, when multiple measurement gap patterns are configured for a terminal, all measurement objects that need to use measurement gaps for measurement can be grouped, and a measurement gap pattern is configured with a group of measurement objects. Optionally, some measurement objects with specific attributes can be classified into a group. In a specific application, a measurement object corresponding to each measurement gap pattern may be indicated in configuration information of the measurement gap patterns. When the measurement gap corresponding to the first measurement gap pattern (the measurement object has a specific attribute) conflicts with the measurement gap corresponding to the second measurement gap pattern (a measurement gap other than the first measurement gap pattern among the multiple measurement gap patterns), the terminal may consider to use the measurement gap corresponding to the first measurement gap pattern for measurement, and drop the measurement gap corresponding to the second measurement gap pattern (which may be multiple measurement gap patterns). In this case, the indication information may include configuration information of the measurement gap patterns, and the terminal may determine a conflict solution according to the configuration information of the measurement gap patterns, without requiring the network side device to send additional indication information. For example, in FIG. 2b and FIG. 2c, it is assumed that gap pattern 1 is used to measure multiple MOs, and gap pattern 2 is used to measure one or more MOs with special attributes. Then, when the gaps of gap pattern 1 and gap pattern 2 collide (that is, conflict), the UE preferentially uses the measurement gap of gap pattern 2 for measurement.

In a possible implementation of the embodiment of this application, the indication information includes at least one of the following (1) to (4).
(1) Priority configuration information, where the priority configuration information is used to indicate a priority of the measurement gap pattern.

In this possible implementation, the system (for example, a network side device) may configure priorities of different measurement gap patterns. For example, the system specifies two or more priorities and configures priorities for different gap patterns. For example, the network side device may configure a higher priority for a measurement gap pattern used for measuring one or more MOs with special attributes, and configure a lower priority for a measurement gap pattern used for measuring other MOs.

In this possible implementation, in S312, according to the priority indicated by the priority configuration information, the terminal may determine to use the first target measurement gap corresponding to the first measurement gap pattern and/or drop the second target measurement gap corresponding to the second measurement gap pattern. The first measurement gap pattern is a measurement gap pattern with the highest priority among the different measurement gap patterns, and the second measurement gap pattern is a measurement gap pattern other than the first measurement gap pattern among the different measurement gap patterns. In this possible implementation, the network side device and the terminal have the same understanding of the measurement gaps to be dropped and used when a conflict occurs, thereby further improving system throughput and system performance.

In a possible implementation, the network side device may notify the terminal of gap pattern priority information through configuration information, and the terminal solves the gap collision problem according to the priority information. For example, the network side device can add new configuration information with a length of n bits to the measurement gap configuration information (for example, IE GapConfig or IE MeasGapConfig) to represent 2^n different priorities. The priority of the gap pattern is specified by the n bits.

Alternatively, the network side device may also notify the terminal of the measurement gap pattern priority information through dedicated signaling.

(2) Ratio configuration information, where the ratio configuration information is used to indicate the ratio of each of the measurement gap patterns in a common time period.

In this possible implementation, the system (for example, the network side device) can directly specify the percentages of different gap patterns, for example, the system directly defines the ratio of each gap pattern in the common time period (common time period) of multiple measurement gap patterns, and the sum of ratios of all gap patterns is 1. When the measurement gaps corresponding to different measurement gap patterns overlap, in a case of ensuring the ratio of each gap pattern, the terminal can autonomously determine which overlapping measurement gap is ignored.

In this possible implementation, in S312, in a case of ensuring the ratio of each of the measurement gap patterns indicated by the ratio configuration information, the terminal determines to use the first target measurement gap corresponding to the first measurement gap pattern and/or drop the second target measurement gap corresponding to the second measurement gap pattern.

For example, the network side device may configure a lower ratio for a measurement gap pattern used for measuring one or more MOs with special attributes, and configure a higher ratio for a measurement gap pattern used for measuring other MOs.

In a possible implementation, the network side device may notify the terminal of the ratio information of each independent measurement gap pattern through configuration information, and the terminal solves the gap collision problem according to the ratio information. For example, the network side device may configure the ratio information of each independent measurement gap pattern as a sequence in configuration information (such as MeasGapConfig).

Alternatively, the network side device may also notify the terminal of the measurement gap pattern ratio information through dedicated signaling.

(3) Control sequence configuration information, where the control sequence configuration information is used to indicate the measurement gap to be dropped and/or the measurement gap to be used when a collision occurs.

In this possible implementation, the system (for example, a network side device) may specify a dropping pattern (dropping pattern) of the measurement gap pattern, and control which measurement gaps are dropped and which measurement gaps are used for each collision. In this possible implementation, the network side device and the terminal have the same understanding of the measurement gaps to be dropped and used when a conflict occurs, thereby further improving system throughput and system performance.

In this possible implementation, in S312, according to the indication of the control sequence configuration information, the terminal may determine the first target measurement gap to be used and/or the second target measurement gap to be dropped.

Optionally, the control sequence configuration information indicates using manners of the conflicting measurement gaps within n first periods, where the first period is the least common multiple of periods of the multiple measurement gap patterns, and n is an integer greater than or equal to 1. When determining the first target measurement gap to be used and/or the second target measurement gap to be dropped, the terminal may cycle according to the n first periods according to the indication of the control sequence configuration information, and determine the first target measurement gap to be used and/or the second target measurement gap to be dropped. For example, assuming that there is only one measurement gap in which the measurement gap pattern 1 and the measurement gap pattern 2 conflict in one first period, the control sequence configuration information can indicate that usage manners of the measurement gaps that conflict in three first periods are as follows: measurement gap pattern 1 is used, measurement gap pattern 2 is used, and measurement gap pattern 1 is used, then in the first period, for the two conflicting measurement gaps, the UE determines that the first target measurement gap is a measurement gap corresponding to the measurement gap pattern 1 and the second target measurement gap is the measurement gap corresponding to the measurement gap pattern 2; in the second first period, for the two conflicting measurement gaps, the UE determines that the first target measurement gap is the measurement gap corresponding to the measurement gap pattern 2 and the second target measurement gap is the measurement gap corresponding to the measurement gap pattern 1; in the third first period, for the two conflicting measurement gaps, the UE determines that the first target measurement gap is the measurement gap corresponding to the measurement gap pattern 1 and the second target measurement gap is the measurement gap corresponding to the measurement gap pattern 2; and in the fourth first period, for the two conflicting measurement gaps, the UE determines that the first target measurement gap is the measurement gap corresponding to the measurement gap pattern 1 and the second target measurement gap is the measurement gap corresponding to the measurement gap pattern 2, and so on.

Optionally, the control sequence configuration information includes k bit groups, and each bit group indicates a usage manner of each conflicting measurement gap in one first period, where m is an integer, 1≤m≤ M, M is a number of conflicts in one first period, k is an integer, 1≤k≤K, and K is the number of measurement gap patterns configured for the terminal.

In the above possible implementation, if there is more than one measurement gap conflict within the first period, the bit group may indicate that the measurement gap corresponding to the same measurement gap pattern is used for each conflict and/or the measurement gap corresponding to the same measurement gap pattern is dropped, that is, m=1; or the usage manner of the measurement gap when each conflict occurs can be indicated, that is, m=M, or this may be indicated for two conflicts or other numbers of conflicts as the unit. For example, if the number of measurement gap conflicts in a first period is 2, the bit group is 2 bits, which respectively indicate usage manners of measurement gaps in the first conflict and usage manner of measurement gaps in the second conflict in a first period.

In the possible implementation, each measurement gap pattern may be indicated by using a bit group, or some measurement gap patterns may be indicated by using a bit group, which is not limited in the embodiment of the present application.

In a specific application, when the terminal is configured with K measurement gap patterns, the network side device can first use two measurement gap patterns as a group, and specify measurement gaps of the measurement gap patterns to be used or to be dropped when measurement gaps of the two measurement gap patterns conflict, and then use three measurement gap patterns as a group, and specify measurement gaps of the measurement gap patterns to be used or to be dropped when measurement gaps of the three measurement gap patterns conflict, and so on, until the network side device uses K measurement gap patterns as a group and calculates the least common multiple of the K measurement gap patterns and uses a control sequence to specify measurement gaps of the measurement gap patterns to be used or to be dropped in case of conflict.

For example, in FIG. 2b and FIG. 2c, for every two measurement gap patterns, the system can calculate the least common multiple of these two measurement gap patterns. Then, according to the desired dropping rate, bits of different lengths are used, and each bit represents selection when gaps of two measurement gap patterns conflict. For example, if there is only one collision (that is, conflict) between measurement gaps in the first period (that is, the length is the least common multiple of periods of the two measurement gap patterns), if 1 means usage and 0 means droping, for any two measurement gap patterns, the following representation can be used:
GP1 [1]
GP2 [0]; that is, 1 bit is used. In this case, the gap of measurement gap pattern 1 (that is, GP1) is used in case of collision.

Alternatively, the following representation can be used:
GP1 [1 0]
GP2 [0 1]; that is 2 bits are used, indicating that the gap of GP1 is used for the collision at moment 0, and the gap of GP2 is used for the next collision (or the next first period (that is, the least common multiple of the periods of GP1 and GP2)), and an analogy may be made for the remaining collisions. In this case, it can indicate that the gap of gap pattern 1 (or 2) can be used for half of the collisions.

Alternatively, the following representation can be used:
GP1 [1 1 0]
GP2 [0 0 1]; that is, 3 bits are used, indicating that the gap of GP1 is used for the collision at moment 0, the gap of GP1 is used for the next collision (that is, the collision in the next first period), and the gap of GP2 is used for the third collision, and an analogy may be made for the remaining collisions. In this case, it can indicate that the gap of gap pattern 1 (or 2) can be used for 67% of the collisions.

Alternatively, the following representation can be used:
GP1 [1110]
GP2 [0 0 0 1]; that is, 4 bits are used. In this case, it can indicate that the gap of gap pattern 1 (or 2) can be used for 75% of the collisions.

In a specific application, when the terminal can determine that two measurement gap patterns are configured, it may only transmit a control sequence relative to one measurement gap pattern.

In a specific application, if a terminal is configured with 3 measurement gap patterns, 2 gap patterns may be first used as a group and a gap of a gap pattern to be used or to be dropped in a case of collision is specified, and then 3 gap patterns are used as a group and the least common multiple is calculated, and the control sequence is determined to specify a gap of a gap pattern to be used in a case of collision. For example, when using 1, 2, and 3 bits, sequences can be expressed as follows:
GP1[1], GP2[0], GP3[0];
GP1 [1 0], GP2 [0 1], GP3 [0 0];
GP1 [1 0 0], GP2 [0 1 0], GP3 [0 0 1],

When one terminal is configured with more than 3 measurement gap patterns, the processing principle and manner are similar to the case of configuring 3 measurement gap patterns. Details are not described in the embodiments of this application.

Optionally, the control sequence configuration information corresponding to each independent measurement gap pattern and indicating usage and/or droping in a case of collision may be configured in its measurement gap pattern configuration information (for example, MeasGapConfig).

Alternatively, the control sequence configuration information of each measurement gap pattern may also be indicated through dedicated target signaling.

(4) Indication information of one or more target measurement objects. That is, the indication information may indicate one or more target measurement objects.

In this possible implementation, in S312, the determining, by the terminal according to the indication information, the first target measurement gap to be used and/or the second target measurement gap to be dropped includes: determining, by the terminal according to one or more target measurement objects indicated by the indication information, to use the first target measurement gap corresponding to the first measurement gap pattern and/or drop the second target measurement gap corresponding to the second measurement gap pattern, where one or more target measurement objects are one or more of the multiple measurement objects in the first measurement gap pattern, and the second measurement gap pattern is a measurement gap pattern other than the first measurement gap pattern among the different measurement gap patterns. That is, in this possible implementation, the network side device may indicate one or more target measurement objects, and when measurement gaps conflict, the terminal uses the measurement gap of the first measurement gap pattern corresponding to the one or more target measurement objects for measurement. The one or more target measurement objects may be one or more of the multiple measurement objects configured in the first measurement gap pattern.

In a possible implementation, the indication information may be carried in configuration information of the measurement gap patterns.

Alternatively, in another possible implementation, the indication information may be carried in target signaling. In S310, the obtaining, by the terminal, indication information of multiple measurement gap patterns includes: receiving, by the terminal, target signaling sent by a network side device, where the target signaling carries the indication information.

It should be noted that although in the above description, the indication information includes the above one type of information to illustrate how the terminal determines the first target measurement gap to be used and/or the second target measurement gap to be dropped, in specific applications, the indication information may also be include the above two or three types of information, the terminal may combine the above two or three types of information to determine the first target measurement gap to be used and/or the second target measurement gap to be dropped. For example, if the terminal is configured with three measurement gap patterns and two measurement gap patterns have the same priority that is higher than the priority of the remaining measurement gap pattern, if the measurement gaps of the two measurement gap patterns conflict, the terminal may determine, in combination with the ratio information of the two measurement gap patterns, the first target measurement gap to be used and/or the second target measurement gap to be dropped.

FIG. 4 is a schematic flowchart of a measurement gap indication method provided by an embodiment of the present application, and the method 400 may be executed by a network side device. In other words, the method may be performed by software or hardware installed in the network side device. As shown in FIG. 4, the method may include the following steps:

S410. A network side device sends indication information of multiple measurement gap patterns to a terminal, where the multiple measurement gap patterns are measurement gap patterns configured by a network side device for the terminal; and the indication information is used to: in a case that measurement gaps corresponding to the different measurement gap patterns conflict with each other, determine a first target measurement gap to be used and/or a second target measurement gap to be dropped, where the first target measurement gap and the second target measurement gap are one or more measurement gaps of the multiple measurement gaps that conflict with each other.

In the embodiment of the application, the network side device may send the indication information when configuring multiple measurement gap patterns for the terminal, or may send the indication information after configuring multiple measurement gap patterns for the terminal. Specifically, this is not limited in the embodiments of this application.

The indication information is the same as the indication information in the method 300. In the embodiment, the related behavior of the network side device is mainly described. For other matters not described, refer to the description in the above method 300, which will not be repeated herein.

In the embodiment of the present application, in the case that there is a conflict between measurement gaps corresponding to different measurement gap patterns, the network side device may determine, in the manner corresponding to the terminal, the first target measurement gap to be used and/or the second target measurement gap to be dropped by the terminal. The first target measurement gap and the second target measurement gap are one or more measurement gaps among the multiple conflicting measurement gaps. For details, refer to the related description in the above method 300 and this will not be repeated herein.

Optionally, the indication information includes but is not limited to at least one of the following (1) to (4).
(1) Priority configuration information, where the priority configuration information is used to indicate a priority of the measurement gap pattern.

In this possible implementation, the network side device can directly specify the priorities of different gap patterns, such as specify two or more priorities and configure priorities for different measurement gap patterns, and the network side device can use configuration information to notify the terminal of the priority information of the measurement gap pattern, and the terminal solves the gap collision problem according to the priority information.

For example, the network side device can add new configuration information with a length of n bits to the measurement gap configuration information (for example, IE GapConfig or IE MeasGapConfig) to represent 2^n different priorities. The priority of the measurement gap pattern is specified by the n bits.

(2) Ratio configuration information, where the ratio configuration information is used to indicate the ratio of each of the measurement gap patterns in a common time period.

In this possible implementation, the network side device directly specifies ratios of different measurement gap patterns. For example, the network side device directly defines the ratio of each measurement gap pattern in the common time period of multiple measurement gap patterns. The sum of the ratios of all the measurement gap patterns is 1. In a case of ensuring the ratio of each measurement gap pattern, the terminal can determine which overlapping measurement gap to ignore.

Optionally, the ratio information of each independent measurement gap pattern may be configured as a sequence in configuration information (such as MeasGapConfig).

(3) Control sequence configuration information, where the control sequence configuration information is used to indicate the measurement gap to be dropped and/or the measurement gap to be used when a collision occurs.

The network side device specifies a dropping pattern of the measurement gap pattern, and control which measurement gaps are dropped and which measurement gaps are used for each collision.

Optionally, the control sequence configuration information indicates using manners of the conflicting measurement gaps within n first periods, where the first period is the least common multiple of periods of the multiple measurement gap patterns, and n is an integer greater than or equal to 1.

Further, the control sequence configuration information includes k bit groups, and each bit group indicates a usage manner of each conflicting measurement gap in one first period, where m is an integer, 1≤m≤ M, M is a number of conflicts in one first period, k is an integer, 1≤k≤K, and K is the number of measurement gap patterns configured for the terminal.

As shown in FIG. 2b and FIG. 2c, for every two gap patterns, the network side device can calculate the least common multiple of the two measured gap patterns. Then, according to the desired dropping rate, bits of different lengths are used, and each bit represents selection when gaps of two gap patterns conflict. For details, refer to related descriptions in the method 300.

(4) Indication information of one or more target measurement objects. That is, the network side device indicates that when a conflict occurs, the measurement gap corresponding to the measurement gap pattern configured with the one or more target measurement objects is used, and other conflicting measurement gaps are dropped.

In a possible implementation, the network side device may carry the indication information in the configuration information of the measurement gap patterns.

In another possible implementation, the network side device may use dedicated signaling to send the indication information to the terminal. Therefore, in this possible implementation, the sending, by the network side device, indication information of the multiple measurement gap patterns to the terminal includes: sending, by the network side device, target signaling to the terminal, where the target signaling carries the indication information.

The above-mentioned method provided by the embodiment of the present application can ensure the performance of configuration modes of some key multiple measurement gap patterns, so that these configuration modes of multiple measurement gap patterns can be realized. Using these configuration modes of multiple measurement gap patterns can further improve system throughput and improve system performance.

It should be noted that, the measurement gap determining method provided in the embodiment of the present application may be executed by a measurement gap determining apparatus, or a control module in the measurement gap determining apparatus for executing the measurement gap determining method. In the embodiment of the present application, the measurement gap determining apparatus provided in the embodiment of the present application is described by taking the measurement gap determining method being performed by the measurement gap determining apparatus as an example.

FIG. 5 is a schematic structural diagram of a measurement gap determining apparatus provided by an embodiment of the present application. As shown in FIG. 5, the apparatus 500 mainly includes: an obtaining module 501 and a determining module 502.

In the embodiment of the present application, the obtaining module 501 is configured to obtain indication information of multiple measurement gap patterns, where the multiple measurement gap patterns are measurement gap patterns configured by a network side device for the terminal; and the determining module 502 is configured to: in a case that measurement gaps corresponding to the different measurement gap patterns conflict with each other, determine, according to the indication information, a first target measurement gap to be used and/or a second target measurement gap to be dropped, where the target measurement gap is one or more measurement gaps of the multiple measurement gaps that conflict with each other.

In a possible implementation, the indication information includes at least one of the following:
priority configuration information, where the priority configuration information is used to indicate a priority of the measurement gap pattern;
ratio configuration information, where the ratio configuration information is used to indicate the ratio of each of the measurement gap patterns in a common time period;
control sequence configuration information, where the control sequence configuration information is used to indicate the measurement gap to be dropped and/or the measurement gap to be used when a collision occurs; and
indication information of one or more target measurement objects.

In a possible implementation, the determining module 502 determining, according to the indication information, the first target measurement gap to be used and/or the second target measurement gap to be dropped includes:
according to the priority indicated by the priority configuration information, determining to use the first target measurement gap corresponding to the first measurement gap pattern and/or drop the second target measurement gap corresponding to the second measurement gap pattern, where the first measurement gap pattern is a measurement gap pattern with the highest priority among the different measurement gap patterns, and the second measurement gap pattern is a measurement gap pattern other than the first measurement gap pattern among the different measurement gap patterns.

In a possible implementation, the determining module 502 determining, according to the indication information, the first target measurement gap to be used and/or the second target measurement gap to be dropped includes:
in a case of ensuring the ratio of each of the measurement gap patterns indicated by the ratio configuration information, determining to use the first target measurement gap corresponding to the first measurement gap pattern and/or drop the second target measurement gap corresponding to the second measurement gap pattern.

In a possible implementation, the determining module 502 determining, according to the indication information, the first target measurement gap to be used and/or the second target measurement gap to be dropped includes:
according to the indication of the control sequence configuration information, determining the first target measurement gap to be used and/or the second target measurement gap to be dropped.

In a possible implementation, the control sequence configuration information indicates using manners of the conflicting measurement gaps within n first periods, where the first period is the least common multiple of periods of the multiple measurement gap patterns, and n is an integer greater than or equal to 1.

In a possible implementation, the control sequence configuration information includes k bit groups, and each bit group indicates a usage manner of each conflicting measurement gap in one first period, where m is an integer, 1≤m≤ M, M is a number of conflicts in one first period, k is an integer, 1≤k≤K, and K is the number of measurement gap patterns configured for the terminal.

In a possible implementation, the determining module 502 determining, according to the indication information, the first target measurement gap to be used and/or the second target measurement gap to be dropped includes:
determining, according to one or more target measurement objects indicated by the indication information, to use the first target measurement gap corresponding to the first measurement gap pattern and/or drop the second target measurement gap corresponding to the second measurement gap pattern, where one or more target measurement objects are one or more of the multiple measurement objects in the first measurement gap pattern, and the second measurement gap pattern is a measurement gap pattern other than the first measurement gap pattern among the different measurement gap patterns.

In a possible implementation, the indication information is carried in configuration information of the measurement gap patterns.

In a possible implementation, the obtaining module 501 obtaining indication information of multiple measurement gap patterns includes:
receiving target signaling sent by the network side device, where the target signaling carries the indication information.

In a possible implementation, the indication information includes: configuration information of the measurement gap patterns. The determining module 502 determining, according to the configuration information, the first target measurement gap to be used and/or the second target measurement gap to be dropped includes: according to the configuration information of the different measurement gap patterns, determining to use the first target measurement gap corresponding to the first measurement gap pattern and/or drop the second target measurement gap corresponding to the second measurement gap pattern, where the first measurement gap pattern is a measurement gap pattern configured with the fewest measurement objects among the different measurement gap patterns, and the second measurement gap pattern is a measurement gap pattern other than the first measurement gap pattern among the different measurement gap patterns.

The measurement gap determining apparatus in the embodiments of the present application may be an apparatus, or may be a component, an integrated circuit, or a chip in a terminal. The apparatus may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The measurement gap determining apparatus in the embodiment of the present application may be an apparatus with an operating system. The operating system may be an Android (Android) operating system, may be an iOS operating system, or may be another possible operating system. This is not specifically limited in the embodiment of this application.

The measurement gap determining apparatus according to embodiments of the present disclosure can implement the processes in the method embodiments in FIG. 3, and achieve the same technical effect. To avoid repetition, details are not described herein again.

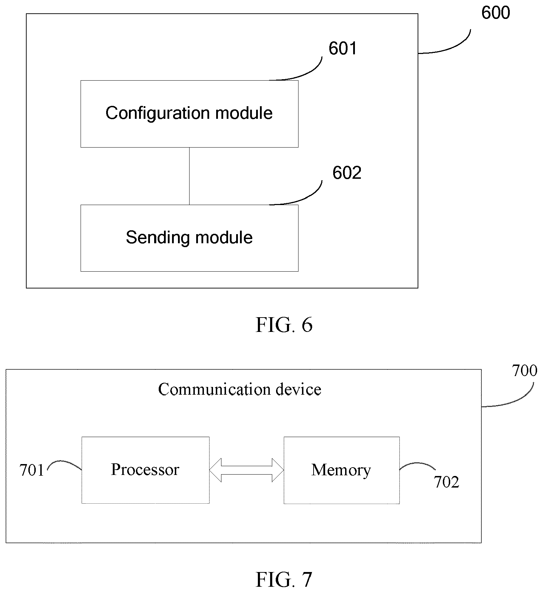

FIG. 6 is a schematic structural diagram of a measurement gap indication apparatus provided by an embodiment of the present application. As shown in FIG. 6, the apparatus 600 mainly includes: a configuration module 601 and a sending module 602.

In the embodiment of the present application, the configuration module 601 is configured to configure multiple measurement gap patterns for a terminal; and the sending module 602 is configured to send indication information of the multiple measurement gap patterns to the terminal, where the indication information is used to: in a case that measurement gaps corresponding to the different measurement gap patterns conflict with each other, determine a first target measurement gap to be used and/or a second target measurement gap to be dropped, where the first target measurement gap and the second target measurement gap are one or more measurement gaps of the multiple measurement gaps that conflict with each other.

In a possible implementation, the indication information includes at least one of the following:
priority configuration information, where the priority configuration information is used to indicate a priority of the measurement gap pattern;
ratio configuration information, where the ratio configuration information is used to indicate the ratio of each of the measurement gap patterns in a common time period;
control sequence configuration information, where the control sequence configuration information is used to indicate the measurement gap to be dropped and/or the measurement gap to be used when a collision occurs; and
indication information of one or more target measurement objects.

In a possible implementation, the control sequence configuration information indicates using manners of the conflicting measurement gaps within n first periods, where the first period is the least common multiple of periods of the multiple measurement gap patterns, and n is an integer greater than or equal to 1.

In a possible implementation, the control sequence configuration information includes k bit groups, and each bit group indicates a usage manner of each conflicting measurement gap in one first period, where m is an integer, 1≤m≤ M, M is a number of conflicts in one first period, k is an integer, 1≤k≤K, and K is the number of measurement gap patterns configured for the terminal.

In a possible implementation, the indication information is carried in configuration information of the measurement gap patterns.

In a possible implementation, the sending module 602 sending indication information of the multiple measurement gap patterns to the terminal includes:
sending target signaling to the terminal, where the target signaling carries the indication information.

The measurement gap indication apparatus according to embodiments of the present disclosure can implement the processes in the method embodiments in FIG. 4, and achieve the same technical effect. To avoid repetition, details are not described herein again.

Optionally, as shown in FIG. 7, an embodiment of the present application further provides a communication device 700, including a processor 701, a memory 702, and a program or an instruction stored in the memory 702 and executable on the processor 701. For example, when the communication device 700 is a terminal, when the program or instruction is executed by the processor 701, each process of the embodiment of the foregoing measurement gap determining method is performed, and the same technical effect can be achieved. When the communication device 700 is a network side device, when the programs or instructions are executed by the processor 701, each process of the above embodiment of the measurement gap indication method is performed, and the same technical effect can be achieved. To avoid repetition, details are not repeated herein.

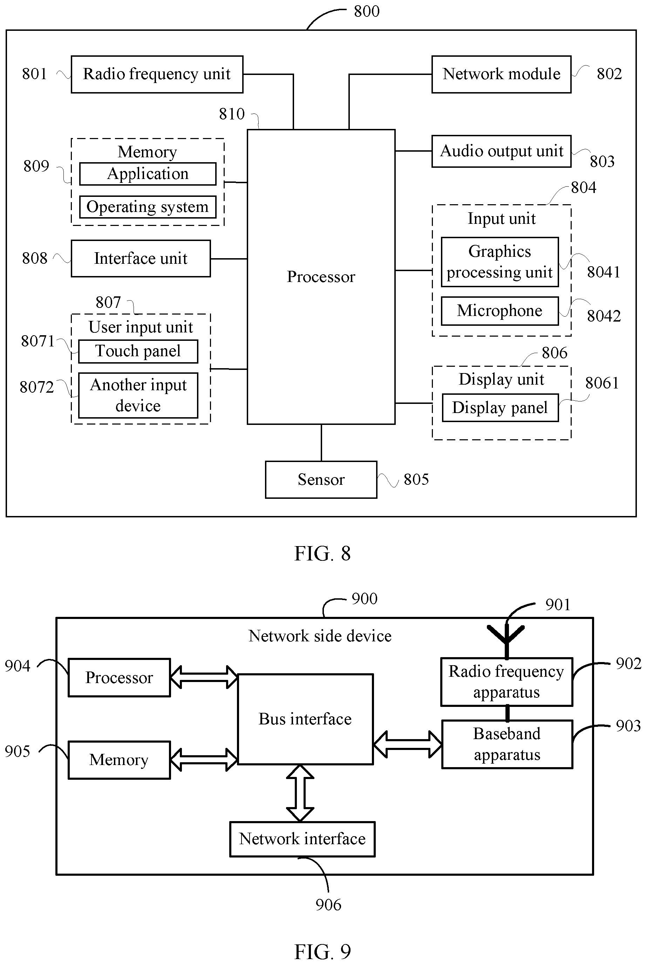

The embodiment of the present application also provides a terminal, including a processor and a communication interface. The processor is configured to obtain indication information of multiple measurement gap patterns, where the multiple measurement gap patterns are measurement gap patterns configured by a network side device for the terminal; and in a case that measurement gaps corresponding to the different measurement gap patterns conflict with each other, determine, according to the indication information, a first target measurement gap to be used and/or a second target measurement gap to be dropped, where the target measurement gap is one or more measurement gaps of the multiple measurement gaps that conflict with each other. The communication interface is configured to communicate with the network side device. This terminal embodiment corresponds to the foregoing method embodiment on the terminal side. Each implementation process and implementation of the foregoing method embodiment may be applicable to this terminal embodiment, and a same technical effect can be achieved. Specifically, FIG. 8 is a schematic diagram of a hardware structure of a terminal according to an embodiment of this application.

Aterminal 800 includes but is not limited to components such as a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the terminal 800 may further include a power supply (such as a battery) that supplies power to each component. The power supply may be logically connected to the processor 810 by using a power supply management system, to implement functions such as charging and discharging management, and power consumption management by using the power supply management system. The terminal structure shown in FIG. 8 constitutes no limitation on the terminal, and the terminal may include more or fewer components than those shown in the figure, or combine some components, or have different component arrangements. Details are not described herein.

It should be understood that, in the embodiment of this application, the input unit 804 may include a graphics processing unit (Graphics Processing Unit, GPU) 8041 and a microphone 8042, and the graphics processing unit 8041 processes image data of a still picture or a video obtained by an image capture apparatus (such as a camera) in a video capture mode or an image capture mode. The display unit 806 may include a display panel 8061. Optionally, the display panel 8061 may be configured in a form such as a liquid crystal display or an organic light-emitting diode. The user input unit 807 includes a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a functional button (such as a volume control button or a power on/off button), a trackball, a mouse, and a joystick. Details are not described herein.

In the embodiment of this application, the radio frequency unit 801 receives downlink data from a network side device and then sends the downlink data to the processor 810 for processing; and sends uplink data to the network side device. Usually, the radio frequency unit 801 includes but is not limited to an antenna, at least one amplifier, a transceiver, a coupler, a low noise amplifier, a duplexer, and the like.

The memory 809 may be configured to store a software program or an instruction and various data. The memory 809 may mainly include a program or an instruction storage area and a data storage area. The program or instruction storage area may store an operating system, and an application or an instruction required by at least one function (for example, a sound playing function or an image playing function). In addition, the memory 809 may include a high-speed random access memory, and may further include a non-transient memory. The non-transient memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-transient solid-state storage component.

The processor 810 may include one or more processing units. Optionally, an application processor and a modem processor may be integrated into the processor 810. The application processor mainly processes an operating system, a user interface, an application, an instruction, or the like. The modem processor mainly processes wireless communication, for example, a baseband processor. It can be understood that, alternatively, the modem processor may not be integrated into the processor 810.

The processor 810 is configured to:
obtain indication information of multiple measurement gap patterns, where the multiple measurement gap patterns are measurement gap patterns configured by a network side device for the terminal; and
in a case that measurement gaps corresponding to the different measurement gap patterns conflict with each other, determine, according to the indication information, a first target measurement gap to be used and/or a second target measurement gap to be dropped, where the target measurement gap is one or more measurement gaps of the multiple measurement gaps that conflict with each other.

In the embodiment of the present application, a terminal obtains indication information of multiple measurement gap patterns, where the multiple measurement gap patterns are measurement gap patterns configured by a network side device for the terminal; and in a case that measurement gaps corresponding to the different measurement gap patterns conflict with each other, the terminal determines, according to the indication information, a first target measurement gap to be used and/or a second target measurement gap to be dropped, where the first target measurement gap and the second target measurement gap are one or more measurement gaps of the multiple measurement gaps that conflict with each other. Therefore, in the case that the measurement gaps corresponding to multiple measurement gap patterns configured for one terminal conflict with each other, the measurement gap to be used or dropped can be determined.

The embodiment of the present application also provides a network side device, including a processor and a communication interface. The processor is configured to configure multiple measurement gap patterns for a terminal; and the communication interface is configured to send indication information of the multiple measurement gap patterns to the terminal, where the indication information is used to: in a case that measurement gaps corresponding to the different measurement gap patterns conflict with each other, determine a first target measurement gap to be used and/or a second target measurement gap to be dropped, where the first target measurement gap and the second target measurement gap are one or more measurement gaps of the multiple measurement gaps that conflict with each other. The embodiment of the network side device corresponds to the above-mentioned measurement gap indication method embodiment, and each implementation process and implementation of the above-mentioned method embodiment can be applied to the embodiment of the network side device, and can achieve the same technical effect.

Specifically, an embodiment of this application further provides a network side device. As shown in FIG. 9, a network device 900 includes an antenna 901, a radio frequency apparatus 902, and a baseband apparatus 903. The antenna 901 is connected to the radio frequency apparatus 902. In an uplink direction, the radio frequency apparatus 902 receives information by using the antenna 901, and sends the received information to the baseband apparatus 903 for processing. In a downlink direction, the baseband apparatus 903 processes information that needs to be sent, and sends processed information to the radio frequency apparatus 902. The radio frequency apparatus 902 processes the received information, and sends processed information by using the antenna 901.

The frequency band processing apparatus may be located in the baseband apparatus 903. The method performed by the network side device in the foregoing embodiment may be implemented in the baseband apparatus 903. The baseband apparatus 903 includes a processor 904 and a memory 905.

The baseband apparatus 903 may include, for example, at least one baseband board, where a plurality of chips are disposed on the baseband board. As shown in FIG. 9, one chip is, for example, the processor 904, which is connected to the memory 905, so as to invoke a program in the memory 905 to perform operations of the network device shown in the foregoing method embodiment.

The baseband apparatus 903 may further include a network interface 906, configured to exchange information with the radio frequency apparatus 902. For example, the interface is a common public radio interface (common public radio interface, CPRI for short).

Specifically, the network side device in the embodiment of the present invention further includes an instruction or a program stored in the memory 905 and executable on the processor 904. The processor 904 invokes the instruction or the program in the memory 905 to perform the method performed by the modules shown in FIG. 6, and a same technical effect is achieved. To avoid repetition, details are not described herein again.

An embodiment of the present application further provides a readable storage medium. The readable storage medium stores a program or an instruction, and when the program or the instruction is executed by a processor, the various processes of the foregoing measurement gap determining method embodiment or the foregoing measurement gap indication method embodiment are performed and the same technical effects can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of the present application further provides a chip, the chip includes a processor and a communication interface, the communication interface is coupled to the processor, and the processor is configured to execute programs or instructions to implement the various processes of the foregoing measurement gap determining method embodiment or the foregoing measurement gap indication method embodiment and the same technical effects can be achieved. To avoid repetition, details are not described herein again.

It should be understood that the chip mentioned in the embodiment of this application may also be referred to as a system-level chip, a system chip, a chip system, or an on-chip system chip.

The embodiment of the present application also provides a computer program/program product, the computer program/program product is stored in a non-transitory storage medium, and the program/program product is executed by at least one processor to realize each process of the embodiment of the above-mentioned measurement gap determining method, or each process of the embodiment of the above-mentioned measurement gap indication method, and can achieve the same technical effect. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of this application. The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A measurement gap determining method, comprising:
obtaining, by a terminal, indication information of multiple measurement gap patterns, wherein the multiple measurement gap patterns are measurement gap patterns configured by a network side device for the terminal; and
in a case that measurement gaps corresponding to different measurement gap patterns conflict with each other, determining, by the terminal according to the indication information, a first target measurement gap to be used and/or a second target measurement gap to be dropped, wherein the first target measurement gap and the second target measurement gap are one or more measurement gaps of multiple measurement gaps that conflict with each other.

2. The method according to claim 1, wherein the indication information comprises at least one of following:
priority configuration information, wherein the priority configuration information is used to indicate a priority of a measurement gap pattern;
ratio configuration information, wherein the ratio configuration information is used to indicate a ratio of each of the measurement gap patterns in a common time period;
control sequence configuration information, wherein the control sequence configuration information is used to indicate a measurement gap to be dropped and/or a measurement gap to be used when a collision occurs; and
indication information of one or more target measurement objects.

3. The method according to claim 2, wherein the determining, by the terminal according to the indication information, a first target measurement gap to be used and/or a second target measurement gap to be dropped comprises:
according to a priority indicated by the priority configuration information, determining, by the terminal, to use the first target measurement gap corresponding to a first measurement gap pattern and/or drop the second target measurement gap corresponding to a second measurement gap pattern, wherein the first measurement gap pattern is a measurement gap pattern with a highest priority among the different measurement gap patterns, and the second measurement gap pattern is a measurement gap pattern other than the first measurement gap pattern among the different measurement gap patterns.

4. The method according to claim 2, wherein the determining, by the terminal according to the indication information, a first target measurement gap to be used and/or a second target measurement gap to be dropped comprises:
in a case of ensuring the ratio of each of the measurement gap patterns indicated by the ratio configuration information, determining, by the terminal, to use the first target measurement gap corresponding to a first measurement gap pattern and/or drop the second target measurement gap corresponding to a second measurement gap pattern.

5. The method according to claim 2, wherein the determining, by the terminal according to the indication information, a first target measurement gap to be used and/or a second target measurement gap to be dropped comprises:
according to an indication of the control sequence configuration information, determining, by the terminal, the first target measurement gap to be used and/or the second target measurement gap to be dropped.

6. The method according to claim 5, wherein the control sequence configuration information indicates using manners of conflicting measurement gaps within n first periods, wherein a first period is the least common multiple of periods of the multiple measurement gap patterns, and n is an integer greater than or equal to 1.

7. The method according to claim 6, wherein the control sequence configuration information comprises k bit groups, and each bit group indicates a usage manner of each conflicting measurement gap in one first period, wherein m is an integer, 1≤m≤ M, M is a number of conflicts in one first period, k is an integer, 1≤k≤K, and K is a number of measurement gap patterns configured for the terminal.

8. The method according to claim 2, wherein the determining, by the terminal according to the indication information, a first target measurement gap to be used and/or a second target measurement gap to be dropped comprises:
determining, by the terminal according to one or more target measurement objects indicated by the indication information, to use the first target measurement gap corresponding to a first measurement gap pattern and/or drop the second target measurement gap corresponding to a second measurement gap pattern, wherein the one or more target measurement objects are one or more of multiple measurement objects in the first measurement gap pattern, and the second measurement gap pattern is a measurement gap pattern other than the first measurement gap pattern among the different measurement gap patterns.

9. The method according to any one of claims 1 to 8, wherein the indication information is carried in configuration information of the measurement gap patterns.

10. The method according to any one of claims 1 to 8, wherein the obtaining, by a terminal, indication information of multiple measurement gap patterns comprises:
receiving, by the terminal, target signaling sent by the network side device, wherein the target signaling carries the indication information.

11. The method according to claim 1, wherein the indication information comprises: configuration information of the measurement gap patterns; and
the determining the first target measurement gap to be used and/or the second target measurement gap to be dropped comprises: according to the configuration information of the different measurement gap patterns, determining to use the first target measurement gap corresponding to a first measurement gap pattern and/or drop the second target measurement gap corresponding to a second measurement gap pattern, wherein the first measurement gap pattern is a measurement gap pattern configured with fewest measurement objects among the different measurement gap patterns, and the second measurement gap pattern is a measurement gap pattern other than the first measurement gap pattern among the different measurement gap patterns.

12. A measurement gap indication method, comprising:
sending, by a network side device, indication information of multiple measurement gap patterns to a terminal, wherein the multiple measurement gap patterns are measurement gap patterns configured by the network side device for the terminal; and the indication information is used to: in a case that measurement gaps corresponding to different measurement gap patterns conflict with each other, determine a first target measurement gap to be used and/or a second target measurement gap to be dropped, wherein the first target measurement gap and the second target measurement gap are one or more measurement gaps of multiple measurement gaps that conflict with each other.

13. The method according to claim 12, wherein the indication information comprises at least one of following:
priority configuration information, wherein the priority configuration information is used to indicate a priority of a measurement gap pattern;
ratio configuration information, wherein the ratio configuration information is used to indicate a ratio of each of the measurement gap patterns in a common time period;
control sequence configuration information, wherein the control sequence configuration information is used to indicate a measurement gap to be dropped and/or a measurement gap to be used when a collision occurs; and
indication information of one or more target measurement objects.

14. The method according to claim 13, wherein the control sequence configuration information indicates using manners of conflicting measurement gaps within n first periods, wherein a first period is the least common multiple of periods of the multiple measurement gap patterns, and n is an integer greater than or equal to 1.

15. The method according to claim 14, wherein the control sequence configuration information comprises k bit groups, and each bit group indicates a usage manner of each conflicting measurement gap in one first period, wherein m is an integer, 1≤m≤ M, M is a number of conflicts in one first period, k is an integer, 1≤k≤K, and K is a number of measurement gap patterns configured for the terminal.

16. The method according to any one of claims 12 to 15, wherein the indication information is carried in configuration information of the measurement gap patterns.

17. The method according to any one of claims 12 to 15, wherein the sending, by a network side device, indication information of multiple measurement gap patterns to a terminal comprises:
sending, by the network side device, target signaling to the terminal, wherein the target signaling carries the indication information.

18. A measurement gap determining apparatus, comprising:
an obtaining module, configured to obtain indication information of multiple measurement gap patterns, wherein the multiple measurement gap patterns are measurement gap patterns configured by a network side device for a terminal; and
a determining module, configured to: in a case that measurement gaps corresponding to different measurement gap patterns conflict with each other, determine, according to the indication information, a first target measurement gap to be used and/or a second target measurement gap to be dropped, wherein the target measurement gap is one or more measurement gaps of multiple measurement gaps that conflict with each other.

19. The apparatus according to claim 18, wherein the indication information comprises at least one of following:
priority configuration information, wherein the priority configuration information is used to indicate a priority of a measurement gap pattern;
ratio configuration information, wherein the ratio configuration information is used to indicate a ratio of each of the measurement gap patterns in a common time period;
control sequence configuration information, wherein the control sequence configuration information is used to indicate a measurement gap to be dropped and/or a measurement gap to be used when a collision occurs; and
indication information of one or more target measurement objects.

20. The apparatus according to claim 19, wherein the determining module determining, according to the indication information, a first target measurement gap to be used and/or a second target measurement gap to be dropped comprises:
according to the priority indicated by the priority configuration information, determining to use the first target measurement gap corresponding to a first measurement gap pattern and/or drop the second target measurement gap corresponding to a second measurement gap pattern, wherein the first measurement gap pattern is a measurement gap pattern with a highest priority among the different measurement gap patterns, and the second measurement gap pattern is a measurement gap pattern other than the first measurement gap pattern among the different measurement gap patterns.

21. The apparatus according to claim 19, wherein the determining module determining, according to the indication information, a first target measurement gap to be used and/or a second target measurement gap to be dropped comprises:
in a case of ensuring the ratio of each of the measurement gap patterns indicated by the ratio configuration information, determining to use the first target measurement gap corresponding to a first measurement gap pattern and/or drop the second target measurement gap corresponding to a second measurement gap pattern.

22. The apparatus according to claim 19, wherein the determining module determining, according to the indication information, a first target measurement gap to be used and/or a second target measurement gap to be dropped comprises:
according to an indication of the control sequence configuration information, determining the first target measurement gap to be used and/or the second target measurement gap to be dropped.

23. The apparatus according to claim 22, wherein the control sequence configuration information indicates using manners of conflicting measurement gaps within n first periods, wherein a first period is the least common multiple of periods of the multiple measurement gap patterns, and n is an integer greater than or equal to 1.

24. The apparatus according to claim 23, wherein the control sequence configuration information comprises k bit groups, and each bit group indicates a usage manner of each conflicting measurement gap in one first period, wherein m is an integer, 1≤m≤ M, M is a number of conflicts in one first period, k is an integer, 1≤k≤K, and K is a number of measurement gap patterns configured for the terminal.

25. The apparatus according to claim 19, wherein the determining module determining, according to the indication information, a first target measurement gap to be used and/or a second target measurement gap to be dropped comprises:
determining, according to one or more target measurement objects indicated by the indication information, to use the first target measurement gap corresponding to a first measurement gap pattern and/or drop the second target measurement gap corresponding to a second measurement gap pattern, wherein the one or more target measurement objects are one or more of multiple measurement objects in the first measurement gap pattern, and the second measurement gap pattern is a measurement gap pattern other than the first measurement gap pattern among the different measurement gap patterns.

26. The apparatus according to any one of claims 18 to 25, wherein the indication information is carried in configuration information of the measurement gap patterns.

27. The apparatus according to any one of claims 18 to 25, wherein the obtaining module obtaining indication information of multiple measurement gap patterns comprises:
receiving target signaling sent by the network side device, wherein the target signaling carries the indication information.

28. The apparatus according to claim 18, wherein the indication information comprises: configuration information of the measurement gap patterns; and
the determining module determining, according to the indication information, the first target measurement gap to be used and/or the second target measurement gap to be dropped comprises: according to configuration information of the different measurement gap patterns, determining to use the first target measurement gap corresponding to a first measurement gap pattern and/or drop the second target measurement gap corresponding to a second measurement gap pattern, wherein the first measurement gap pattern is a measurement gap pattern configured with fewest measurement objects among the different measurement gap patterns, and the second measurement gap pattern is a measurement gap pattern other than the first measurement gap pattern among the different measurement gap patterns.

29. A measurement gap indication apparatus, comprising:
a configuration module, configured to configure multiple measurement gap patterns for a terminal; and
a sending module, configured to send indication information of the multiple measurement gap patterns to the terminal, wherein the indication information is used to: in a case that measurement gaps corresponding to different measurement gap patterns conflict with each other, determine a first target measurement gap to be used and/or a second target measurement gap to be dropped, wherein the first target measurement gap and the second target measurement gap are one or more measurement gaps of multiple measurement gaps that conflict with each other.

30. The apparatus according to claim 29, wherein the indication information comprises at least one of following:
priority configuration information, wherein the priority configuration information is used to indicate a priority of a measurement gap pattern;
ratio configuration information, wherein the ratio configuration information is used to indicate a ratio of each of the measurement gap patterns in a common time period;
control sequence configuration information, wherein the control sequence configuration information is used to indicate a measurement gap to be dropped and/or a measurement gap to be used when a collision occurs; and
indication information of one or more target measurement objects.

31. The apparatus according to claim 30, wherein the control sequence configuration information indicates using manners of conflicting measurement gaps within n first periods, wherein a first period is the least common multiple of periods of the multiple measurement gap patterns, and n is an integer greater than or equal to 1.

32. The apparatus according to claim 31, wherein the control sequence configuration information comprises k bit groups, and each bit group indicates a usage manner of each conflicting measurement gap in one first period, wherein m is an integer, 1≤m≤ M, M is a number of conflicts in one first period, k is an integer, 1≤k≤K, and K is a number of measurement gap patterns configured for the terminal.

33. The apparatus according to any one of claims 29 to 32, wherein the indication information is carried in configuration information of the measurement gap patterns.

34. The apparatus according to any one of claims 29 to 32, wherein the sending module sending indication information of the multiple measurement gap patterns to the terminal comprises:
sending target signaling to the terminal, wherein the target signaling carries the indication information.

35. A terminal, comprising a processor, a memory, and a program or an instruction stored in the memory and executable on the processor, wherein when the program or instruction is executed by the processor, steps of the measurement gap determining method according to any one of claims 1 to 11 are implemented.

36. A network side device, comprising a processor, a memory, and a program or an instruction stored in the memory and executable on the processor, wherein when the program or instruction is executed by the processor, steps of the measurement gap indication method according to any one of claims 12 to 17 are implemented.

37. A readable storage medium, storing a program or an instruction in the readable storage medium, wherein when the program or instruction is executed by a processor, steps of the measurement gap determining method according to any one of claims 1 to 11 or the measurement gap indication method according to any one of claims 12 to 17 are implemented.
